(19) **Europäisches Patentamt**
**European Patent Office**
**Office européen des brevets**

(11) **EP 1 725 407 B1**

(12) **EUROPEAN PATENT SPECIFICATION**

(45) Date of publication and mention
of the grant of the patent:
**11.04.2012 Bulletin 2012/15**

(51) Int Cl.:
***B41J 2/045*** *(2006.01)* ***B41J 2/19*** *(2006.01)*
***B41J 2/17*** *(2006.01)*

(21) Application number: **05713809.1**

(22) Date of filing: **18.02.2005**

(86) International application number:
**PCT/US2005/005264**

(87) International publication number:
**WO 2005/079500 (01.09.2005 Gazette 2005/35)**

(54) **PRINTHEAD**

DRUCKKOPF

TETE D'IMPRESSION

(84) Designated Contracting States:
**AT BE BG CH CY CZ DE DK EE ES FI FR GB GR HU IE IS IT LI LT LU MC NL PL PT RO SE SI SK TR**

(30) Priority: **19.02.2004 US 782367**

(43) Date of publication of application:
**29.11.2006 Bulletin 2006/48**

(73) Proprietor: **Dimatix, Inc.**
**Lebanon NH 03766 (US)**

(72) Inventors:
• **HOISINGTON, Paul, A.**
**Norwich, VT 05055 (US)**

• **BATTERTON, John, C.**
**Los Gatos, CA 95030 (US)**

(74) Representative: **Lang, Johannes**
**Bardehle Pagenberg**
**Postfach 86 06 20**
**81633 München (DE)**

(56) References cited:
**US-A- 5 254 143        US-A- 5 489 930**
**US-A- 5 808 643        US-A- 5 808 643**
**US-B1- 6 457 820**

**Description**

**TECHNICAL FIELD**

This invention relates to printheads.

**BACKGROUND**

Ink jet printers typically include an ink path from an ink supply to a nozzle path. The nozzle path terminates in a nozzle opening from which ink drops are ejected. Ink drop ejection is controlled by pressurizing ink in the ink path with an actuator, which may be, for example, a piezoelectric deflector, a thermal bubble jet generator, or an electro statically deflected element. A typical printhead has an array of ink paths with corresponding nozzle openings and associated actuators, such that drop ejection from each nozzle opening can be independently controlled. In a drop-on-demand printhead, each actuator is fired to selectively eject a drop at a specific pixel location of an image as the printhead and a printing substrate are moved relative to one another. In high performance printheads, the nozzle openings typically have a diameter of 50 microns or less, e.g. around 35 microns, are separated at a pitch of 100-300 nozzle/inch, have a resolution of 100 to 3000 dpi or more, and provide drop sizes of about 1 to 70 picoliters or less. Drop ejection frequency is typically 10kHz or more.

Hoisington et al. U.S. Patent No. 5,265,315, describes a printhead assembly that has a semiconductor body and a piezoelectric actuator. The body is made of silicon, which is etched to defme ink chambers. Nozzle openings are defined by a separate nozzle plate, which is attached to the silicon body. The piezoelectric actuator has a layer of piezoelectric material, which changes geometry, or bends, in response to an applied voltage. The bending of the piezoelectric layer pressurizes ink in a pumping chamber located along the ink path. Piezoelectric ink jet print assemblies are also described in Fishbeck et al. U.S. Patent No. 4,825,227, Hine U.S. Patent No. 4,937,598, Moynihan et al. U.S. Patent No. 5,659,346, and Hoisington U.S. Patent No. 5,757,391.

Printing accuracy of printheads, especially high performance printheads, is influenced by a number of factors, including the size and velocity uniformity of drops ejected by the nozzles in the printhead. The drop size and drop velocity uniformity are in turn influenced by a number of factors, such as, for example, the contamination of the ink flow paths with dissolved gasses or bubbles. Deaeration of ink is described in Hine et al. U.S. 4,940,955, Hoisington, U.S. 4,901,082, Moynihan et al. U.S. 5,701,148, and Hine U.S. 5,742,313.

From document US 5 808 643, there is known a method and an apparatus for removing dissolved air in ink and air bubbles or air pockets from ink passageways in ink jet printer cartridges by use of a permeable membrane tubing member positioned in the ink at a location adjacent the ink inlet of the printer's droplet ejecting printhead, where the permeable membrane tubing member is connected to a vacuum source to diffuse air into the vacuum in the tubing member interior.

**SUMMARY**

In an aspect, the invention features a drop ejection device, such as for example a printhead device. The drop ejection device includes a flow path in which fluid is pressurized for ejection of a drop from a nozzle opening and a deaerator that includes a fluid reservoir region, a vacuum region, and a partition between the fluid reservoir region and the vacuum region. The partition of the deaerator includes a wetting layer and a non-wetting layer and one or more channels extending through the wetting and non-wetting layers. The wetting layer is exposed to the fluid reservoir region.

Embodiments may include one or more of the following. The channels in the partition have a width of about 0.1 micron to about 5 microns. The channels are through-holes. The flow path and the deaerator are in a silicon material body. The surface energy of the wetting layer of the partition is about 40 dynes/cm or more as determined according to the dynes test. The wetting layer is a silicon material. The non-wetting layer has a surface energy of about 25 dynes/cm or less as determined according to the dynes test. The non-wetting layer is a polymer. The non-wetting layer is a fluoropolymer. The non-wetting layer has a thickness of about 2 microns or less. The wetting layer has a thickness of about 25 microns or less.

Embodiments may include one or more of the following. The device includes a piezoelectric actuator. The nozzle opening in the device has a width of about 200 microns or less. The device includes a plurality of fluid paths and a plurality of corresponding deaerators.

In an aspect, the invention features a method of drop ejection. The method includes providing a flow path in which fluid is pressurized for ejecting drops from a nozzle. Prior to pressurizing the fluid, exposing the fluid to a deaerator. The deaerator includes a fluid reservoir region, a vacuum region, and a partition between the reservoir region and the vacuum region, wherein the partition includes a wetting layer and a non-wetting layer and one or more channels through the wetting layer and the non-wetting layer. The next step of the method includes directing the fluid into the reservoir region, and providing a vacuum in the vacuum region that prohibits fluid flow into the vacuum region through channels.

Embodiments may include one or more of the following. A radius of one of the channels in the partition is less than a value defined by two times the surface energy of the fluid divided by the vacuum pressure. The vacuum has a vacuum pressure of about 10 to 27 mmHg.

Embodiments may have one or more of the following advantages. The partition can be incorporated into the fluid supply path of a printhead, allowing the ink to be degassed in close proximity to a pumping chamber. As a result, the ink can be degassed efficiently, which leads to improved purging processes within the printhead as well as improved high frequency operation. As a further result, the size of the printhead can be reduced by the incorporation of the partition within the ink supply path and the elimination of a separate deaeration device. The deaerator can be formed using silicon or other semiconductor materials.

Other aspects, features, and advantages will be apparent from the description and drawings, and from the claims.

## DESCRIPTION OF DRAWINGS

FIG 1 is a perspective view of a printing apparatus.

FIG. 2 is a cross-sectional view of a portion of a printing apparatus.

FIG. 3A is a cross-sectional view of a portion of a deaerator, while FIG. 3B is an enlarged view of an area labeled A in FIG 3A.

FIGS. 4A-4F are cross-sectional views illustrating the manufacture of a deaerator.

FIG. 5A is a cross-sectional view of a deaerator, while FIG 5B is an enlarged view of an area labeled B in FIG. 5A.

FIG 6 is a cross-sectional view of a portion of a deaerator.

Like reference symbols in the various drawings indicate like elements.

## DETAILED DESCRIPTION

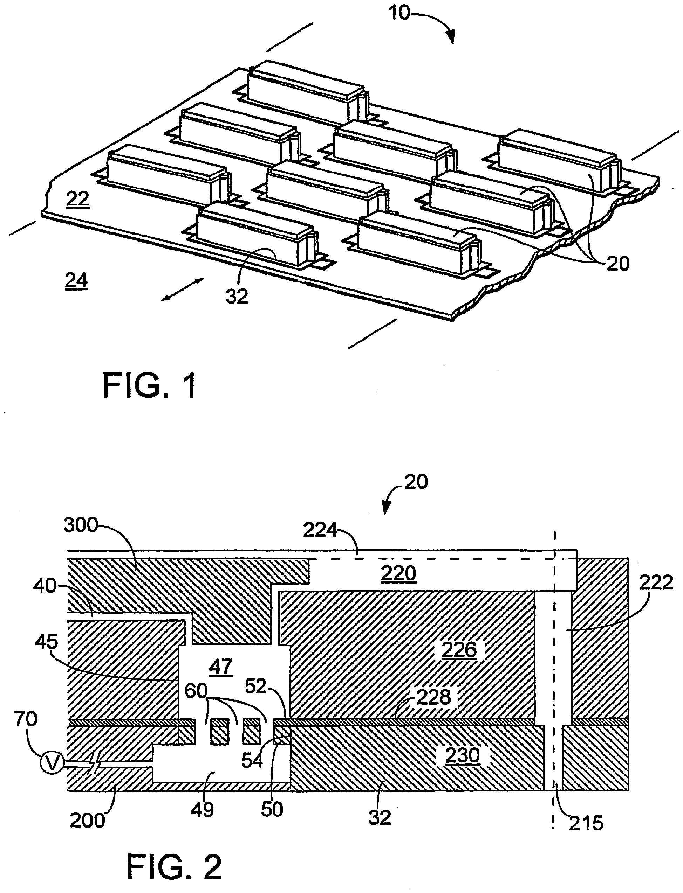

Referring to Fig. 1, an ink jet printhead 10 includes printhead units 20 held in a manner that they span a sheet 24, or a portion of the sheet, onto which an image is printed. The image can be printed by selectively jetting ink from the units 20 as the printhead 10 and the sheet 24 move relative to one another (arrow). In the embodiment in Fig. 1, three sets of printhead units 20 are illustrated across a width of, for example, about 12 inches or more. Each set includes multiple printhead units, in this case three, along the direction of relative motion between the printhead 10 and the sheet 24. The units can be arranged to offset nozzle openings to increase resolution and/or printing speed. Alternatively, or in addition, each unit in each set can be supplied ink of a different type or color. This arrangement can be used for color printing over the full width of the sheet in a single pass of the sheet by the printhead.

Referring to Fig. 2, each printhead unit 20 includes a plurality of flow paths in which fluid can be pressurized to eject ink from a corresponding nozzle opening. In the embodiment illustrated, a flow path includes a pumping chamber 220, a nozzle path 222, and a nozzle 215. Fluid is pressurized in the pumping chamber 220 by a piezoelectric actuator 224. Features of the flow path are formed in a body of a material that can be etched by wet or plasma etching techniques. Examples of materials that can be etched using wet or plasma etching techniques include silicon materials (e.g., silicon wafer, a silicon on insulator wafer (SOI)) and ceramic materials (e.g., a sapphire substrate, an alumina substrate, an aluminum nitride substrate). In the embodiment shown in Fig. 2, the flow path is etched into an SOI wafer which includes an upper silicon layer 226, a buried silicon dioxide layer 228, and a lower silicon layer 230. A printhead having flow path features in silicon material is further described in U.S. Patent Application Serial No. 10/189,947, filed on July 3, 2002, and U.S. Serial No. 60/510,459 filed October 10, 2003.

Upstream of the pumping chamber 220 along the ink flow path is a deaerator 45. The deaerator 45 includes a fluid reservoir region 47, a partition 50, and a vacuum region 49 in communication with a vacuum source 70. The partition 50 includes passageways 60 between the reservoir region 47 and the vacuum region 49. The partition 50 also includes a wetting layer 52 and a non-wetting layer 54. The fluid reservoir region 47 is a region along the ink flow path that receives fluid from a supply path 40 and exposes the fluid to the partition 50. In the vacuum region 49, the pressure is maintained by the vacuum source 70 at a pressure lower (e.g., 10 to 27 mmHg) than the pressure in the reservoir region (e.g., 600 mmHg to 800 mmHg).

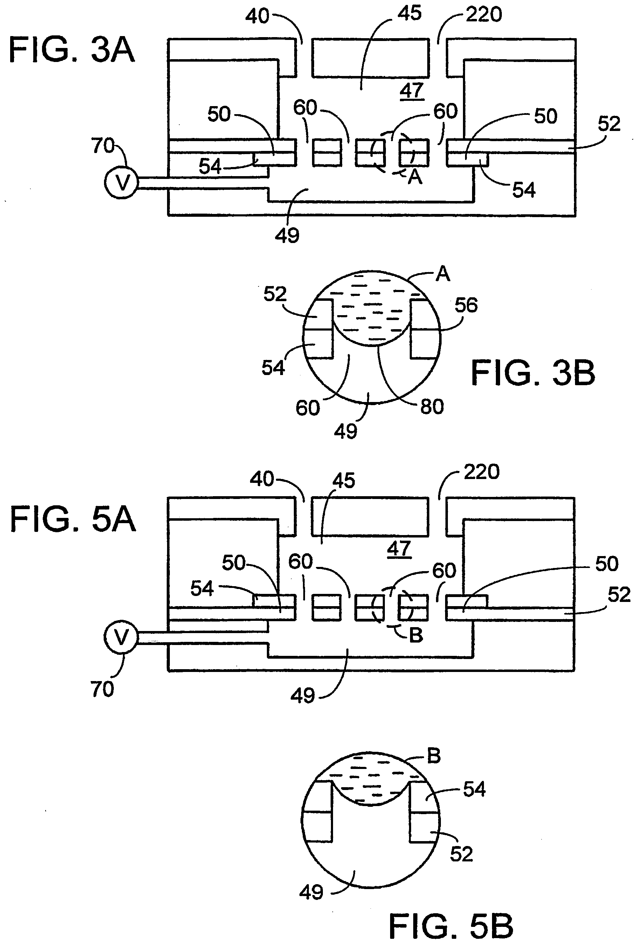

Referring as well to Figs. 3A and 3B, fluid in reservoir region 47 contacts partition 50 and enters passageways 60 where a meniscus 80 is formed at the interface between the wetting and non-wetting layers 52, 54. The fluid in the reservoir region is exposed, through the passageways 60, to the lower pressure in the vacuum region 49, which extracts air and other gasses from the fluid. Fluid from the reservoir region enters pumping chamber 220 where it is pressurized for ejection. The size of the passageways, magnitude of the vacuum, and the materials of the partition layers are selected such that fluid is drawn into the passageways, but not drawn through the passageways into the vacuum region 49.

The shape of a liquid, solid, vapor interface at equilibrium conforms to a minimum total interfacial energy for the boundaries present. A contact angle, θ, which describes the shape of the interface, is determined through a force balance of the competing interfacial energies ($\gamma_{lv}$, which is the interfacial energy of the liquid-vapor interface, $\gamma_{sl}$, which is the interfacial energy of the liquid-solid interface, and $\gamma_{sv}$, which is the interfacial energy of the solid-vapor interface).

The contact angle is described by the following equation:

$$\cos(\theta) = \frac{\gamma_{sv} - \gamma_{sl}}{\gamma_{lv}} \qquad \text{Equation (1)}$$

A value of 90° for the contact angle is general defined as the difference between wetting and non-wetting. For example, a contact angle greater than 90° defines an interface in which the liquid does not wet the solid surface, but rather balls up on the surface. A contact angle of less than 90° defines an interface in which the liquid wets the surface.

The materials used for the wetting layer 52 and the non-wetting layer 54 are selected with Equation (1) in mind, such that the contact angle between the wetting layer and the fluid in the passageway is less than 90° and the contact angle between the non-wetting layer and the fluid is greater than 90°. As a result, fluid within the reservoir region 47 wets the passageway 60 along the wetting layer 52, until the fluid intersects an interface 56 between the wetting and non-wetting layers. At the interface, due to the change in contact angle between the liquid and the walls of the passageway formed of non-wetting layer 54, the ink forms meniscus 80.

In order to maintain meniscus 80 within the passageways 60, the pressure of the meniscus, $P_m$, must be greater than the vacuum pressure, $P_v$, used to remove gasses and bubbles from the ink (i.e., $P_m > P_v$). The pressure of the meniscus is defined as:

$$P_m = \gamma_{lv}(r_1^{-1} + r_2^{-1}) \qquad \text{Equation (2)}$$

That is, the pressure created by the meniscus is equal to the surface energy of the liquid, $\gamma_{lv}$, times the principal radii of the meniscus, $r_1 + r_2$. The principal radii describe local surface curvature of the meniscus and as such define the geometry of the surface of the meniscus.

For a meniscus within a cylindrical passageway having a diameter of 2R, the curved surface of the meniscus is described by $r_1 = r_2 = R/\sin(\theta-90°)$ and the equation for meniscus pressure can be reduced to:

$$P_m = \frac{2(\gamma_{lv})\sin(\theta-90°)}{R} \qquad \text{Equation (3)}$$

To maintain the meniscus in the passageway, the vacuum pressure, $P_v$, should be:

$$P_v < \frac{2(\gamma_{lv})\sin(\theta-90°)}{R} \qquad \text{Equation (4)}$$

As such, when a vacuum pressure of $P_v$ is created in deaerator 45, ink will be drawn into the passageways to form meniscus 80. The radius of the passageway, R, should be defined by the following expression:

$$R \le \frac{2(\gamma_{lv}) \sin(\theta-90^\circ)}{P_v} \qquad\qquad \text{Equation (5)}$$

For a perfectly non-wetting layer (e.g., $\theta$ =180°) the above equation reduces to:

$$R \le \frac{2(\gamma_{lv})}{P_v} \qquad\qquad \text{Equation (6)}$$

As a result, in a deaerator having partition 50 and used for degassing a fluid that has a surface energy of 30 dynes/cm, the radius of the passageway should be less than about 0.6 micron to support a meniscus at 1 atmosphere of pressure.

The radius of the passageway can also be described in relation to the surface energy of the solid-liquid and solid-vapor interfaces of the non-wetting layer 54. After substituting -cos($\theta$) for sin($\theta$-90), and replacing cos($\theta$) with Equation 1, Equation 5 can be reduced to :

$$R \le \frac{2(\gamma_{sl} - \gamma_{sv})}{P_v} \qquad\qquad \text{Equation (7)}$$

Further discussion of surface energy and related thermodynamic calculations can be found in chapter 12 of "Thermodynamics in Materials Science" by Robert T. DeHoff, McGraw-Hill, Inc. New York, 1993.

In embodiments, the radius of the passageways is about 5 microns or less, e.g., between about 5 microns and about 0.1 micron, and preferably between about 1.0 micron and 0.5 micron, for a vacuum pressure that is 1 atmosphere or less. A partition that has a fluid exposed surface area of several square centimeters typically includes thousands of passageways, such that 10% to 90% (e.g., 20% to 80%, 30% to 70%, 40% to 50%) of the partition is made up of open passageways.

In embodiments, the fluid, e.g., an ink, has a surface energy of about 25 dynes/cm to about 40 dynes/cm. The wetting layer 52 has a surface energy (e.g., $\gamma_{sl}$ - $\gamma_{sv}$) equal to or greater than 40 dynes/cm as determined according to the dynes test. In general, the dynes test is used to determine the surface energy of a solid surface through the application of a series of fluids that each have a different surface energy level (e.g., 30 dynes/cm to 70 dynes/cm in +1dynes/cm increments.) A drop of one of the fluids in the series is applied to the solid surface. If the drop wets the surface, then a drop of the next higher surface energy level fluid is applied to the solid surface. This process is continued until the drop of fluid does not wet the solid surface. The surface energy of the solid surface is determined to be the same as the surface energy of the first fluid in the series that does not wet the solid surface. Equipment and instructions for performing the dynes test are available from Diversified Enterprises, Claremont, NH. An example of a suitable material for the wetting layer 52 is a silicon layer or an oxide layer, such as silicon dioxide. In embodiments, the wetting layer has a thickness of about 25 microns or less, e.g., 1 micron or less.

In embodiments, the non-wetting layer 54 has a surface energy of about 40 dynes/cm or less, such as 25 dynes/cm or less as determined according to the dynes test. In some embodiments, the non-wetting layer 54 has a surface energy that is between about 20 dynes/cm and about 10 dynes/cm as determined according to the dynes test. An example of a suitable material for the non-wetting layer 54 is a polymer, such as a fluoropolymer, e.g., Teflon. In embodiments, the non-wetting layer 54 has a thickness of about 2 microns, e.g. about 1 micron or about 0.5 micron. In particular embodiments, the ink has a viscosity of about 2 to 40 cps. The printhead is a piezoelectric inkjet printhead with nozzles having a nozzle width of about 200 micron or less, e.g., 10 to 50 micron, and the drop volume is about 1 to 700 pl. In embodiments, a non-wetting coating is provided around the nozzle openings. The non-wetting coating material can be the same material used for the non-wetting layer in deaerator partition.

In embodiments, the contact angle is effected by providing a morphology on the wall defining the passageway, particularly on the non-wetting layer 54. For example, the walls of the passageway can be roughened to include a microstructured surface, such as a plurality of closely-spaced, sharp-tipped nanostructures as described in "Nanostructured Surfaces for Dramatic Reduction of Flow Resistance in Droplet-Based Microfluidics" by Joonwon Kim et al., IEEE publication number 0-7803-7185-2/02 pp. 479-482. In embodiments, the contact angle of the fluid in the passageway is 170° or greater.

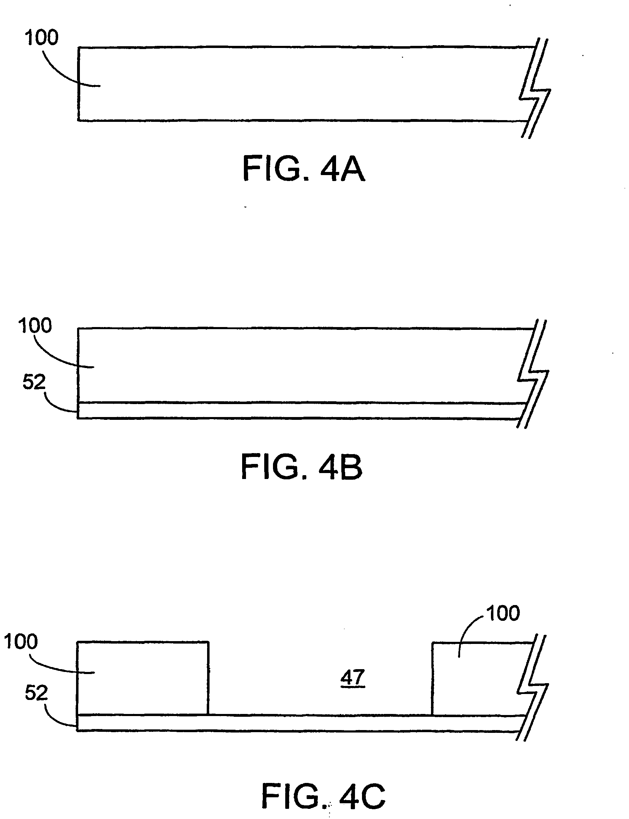

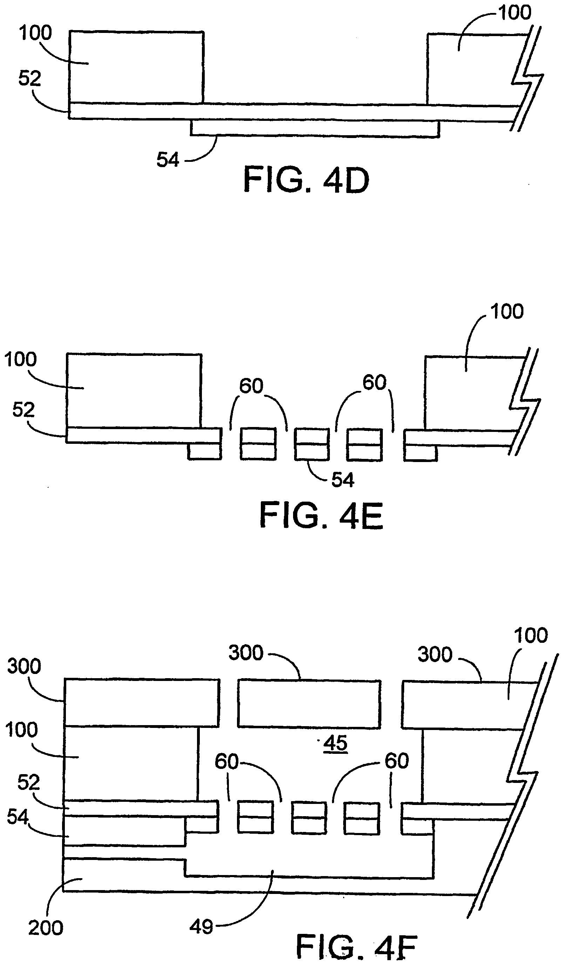

Referring to Figs. 4A-4F, manufacture of deaerator is illustrated. Referring to Fig. 4A, a substrate 100 is provided. The substrate is a silicon wafer into which flow path features, such as the pumping chamber (not shown) are defined. Referring to Fig. 4B, a layer 52 of wettable material is formed on one side of the substrate 100. The wettable material is e.g., a silicon dioxide layer which can be thermally grown or deposited by vapor deposition. In an alternative embodiment, the silicon dioxide layer is provided by providing a silicon on insulator wafer. Referring to Fig. 4C, the substrate 100 is etched to form fluid reservoir region 47 and to expose the back of the wetting layer. Referring to Fig. 4D, a layer 54 of non-wetting material is deposited over the wetting material opposite the reservoir region 47. The non-wetting material is, e.g., a polymer which is formed by solvent casting or thermal deposition, followed by cross linking. Referring to Fig. 4E, passageways 60 are formed in the partition 50. The passageways 60 are formed, for example, by mechanical or excimer laser drilling or high density plasma etching through both the non-wetting layer and the wetting layer. Referring to Fig. 4F, substrates 200, 300, e.g., silicon substrate are provided (e.g., adhesively bonded to substrate 100) to complete reservoir region 47 and vacuum region 49.

While certain embodiments have been described, other embodiments are possible. For example, referring to Figs. 5A and 5B, a partition 50 is oriented such that the non-wetting layer 54 is adjacent the reservoir region and the wetting layer 52 is adjacent the vacuum region.

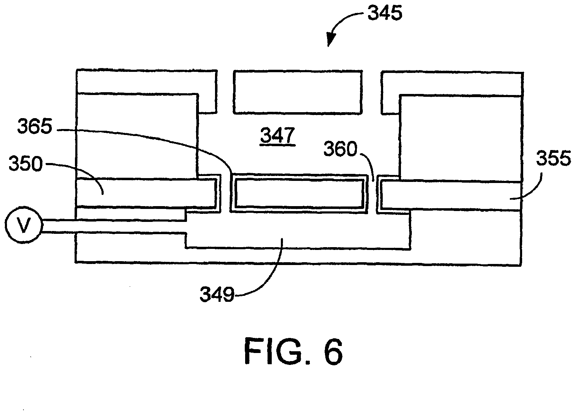

Referring to Fig. 6, in embodiments, a deaerator 345 includes a partition 350 positioned between ink reservoir region 347 and vacuum region 349. The partition 350 includes a layer 355 including through-holes 360 that extend from the ink reservoir region 347 to the vacuum region 349. Layer 355 can be formed of a silicon material (e.g., silicon wafer, silicon dioxide), a polymeric material (e.g. fluoropolymer) and/or a ceramic material (e.g., alumina, sapphire, zirconia, aluminum nitride). In addition, layer 355 can be formed from a material that provides a non-wettable surface along through-holes 360. A coating 365 of a non-wetting material (e.g., fluoropolymer) can be deposited over layer 355 such that the walls of the through-holes 360 are coated.

In embodiments, layer 355 has a thickness of about 5 microns or less, through-holes 360 have a diameter that is about 1 micron or less, preferably between about 200 nanometers and 800 nanometers, and coating 365 has a thickness about 10 nanometers to 80 nanometers. As a result, in some embodiments, the passageway through the through-holes 360 including coating 365 has an inner diameter of about 40 nanometers to about 780 nanometers. To form partition 350, layer 355 is plasma etched to include through-holes 360. After the through-holes 360 are formed in layer 355, coating 365 is deposited on layer 355 using vapor deposition techniques to coat layer 355 and the walls of the through-holes 360 with a non-wetting material. In some embodiments, layer 355 is formed of a non-wetting material (e.g., fluoropolymer), and partition 350 includes layer 355 and through-holes 360 (e.g., coating 365 is not included).

In embodiments, a separate deaerator is provided for each pumping chamber. In other embodiments, a single deaerator is provided for multiple pumping chambers. In embodiments, the partition includes more than two layers. For example, multiple layers of the same or different wettable materials, e.g. silicon and silicon oxide can be used to provide a composite wettable layer. Multiple layers of the same or different non-wettable material can be provided to form a composite non-wettable layer. In embodiments, the partition includes a plurality of alternate wettable and non-wettable materials. The alternate layers provide combinations of adjacent wettable and non-wettable materials selected to provide and retain a meniscus for fluids of different surface energy and/or at different vacuum pressures.

Still further embodiments follow. For example, while ink can be deaerated within and jetted from printhead unit, the printhead unit can be utilized to eject fluids other than ink. For example, the deposited droplets may be a UV or other radiation curable material or other material, for example, chemical or biological fluids, capable of being delivered as drops. For example, the printhead unit 20 described could be part of a precision dispensing system.

All of the features disclosed herein may be combined in any combination. Each feature disclosed may be replaced by an alternative feature serving the same, equivalent, or similar purpose. Thus, unless expressly stated otherwise, each feature disclosed is only an example of a generic series of equivalent or similar features.

## Claims

1. A drop ejection device (20), comprising:

   a flow path (220, 222, 215) in which fluid is pressurized for ejecting a drop from a nozzle opening, and
   a deaerator (45) including a fluid reservoir region (47), a vacuum region (49), and a partition (50) between the fluid reservoir region (47) and the vacuum region (49),
   **characterized in**
   the partition (50) including a wetting layer (52) and a non-wetting layer (54) and one or more channels (60) extending through the wetting and non-wetting layers, wherein the wetting layer (52) is exposed to the fluid reservoir region (47).

2. The device (20) of claim 1, wherein the one or more channels (60) have a width of about 0.1 micron to about 5 microns.

3. The device (20) of claim 1, wherein the one or more channels (60) are through-holes.

4. The device (20) of claim 1, wherein the flow path (220, 222, 215) and the deaerator (45) are in a silicon material body.

5. The device (20) of claim 1, wherein the wetting layer (52) has a surface energy of about 40 dynes/cm or more as determined according to the dynes test.

6. The device (20) of claim 1, wherein the wetting layer (52) is a silicon material.

7. The device (20) of claim 1, wherein the non-wetting layer (54) has a surface energy of about 25 dynes/cm or less as determined according to the dynes test.

8. The device (20) of claim 1, wherein the non-wetting layer (54) is a polymer.

9. The device (20) of claim 8, wherein the polymer is a fluoropolymer.

10. The device (20) of claim 1, wherein the non-wetting layer (54) has a thickness of about 2 microns or less.

11. The device (20) of claim 1, wherein the wetting layer (52) has a thickness of about 25 microns or less.

12. The device (20) of claim 1, including a piezoelectric actuator.

13. The device (20) of claim 1, wherein the nozzle opening has a width of about 200 microns or less.

14. The device (20) of claim 1, wherein the device includes a plurality of fluid paths and a plurality of corresponding deaerators (45).

15. A method of drop ejection, comprising:

providing a flow path (220, 222, 215) in which fluid is pressurized for ejecting drops from a nozzle;
prior to pressurizing said fluid, exposing said fluid to a deaerator (45), the deaerator (45) including a fluid reservoir region (47), a vacuum region (49), and a partition (50) between the reservoir region (47) and the vacuum region (49), wherein the partition (50) includes a wetting layer (52) and a non-wetting layer (54) and one or more channels (60) through the wetting layer (52) and the non-wetting layer (54);
directing fluid into said reservoir region (47);
providing a vacuum in said vacuum region (49) that prohibits fluid flow into the vacuum region (49) through said channels (60).

16. The method of claim 15, wherein a radius of one of the one or more channels (60) is less than a value defined by the following expression:

$$\frac{2 \text{ (the surface energy of the fluid)}}{\text{the vacuum pressure.}}$$

17. The method of claim 15 wherein the vacuum has a pressure of about 10 to 27 mmHg.

18. The drop ejection device of claim 3, wherein a diameter of at least one of the through-holes is between about 200 nanometers and about 800 nanometers.

19. The drop ejection device of claim 3, wherein a wall defining at least one of the through-holes has a microstructured surface

**Patentansprüche**

1. Tropfenausstoßvorrichtung (20), aufweisend:

   einen Flusspfad (220, 222, 215), in dem Fluid unter Druck gesetzt wird, zum Ausstoßen eines Tropfens aus einer Düsenöffnung, und
   eine Entlüftungseinrichtung (45), die einen Fluidreservoirbereich (47), einen Vakuumbereich (49) und eine Partition (50) zwischen dem Fluidreservoirbereich (47) und dem Vakuumbereich (49) aufweist,
   **dadurch gekennzeichnet, dass**
   die Partition (50) eine benetzende Schicht (52) und eine nichtbenetzende Schicht (54) sowie einen oder mehrere Kanäle (60) aufweist, die sich durch die benetzende Schicht und die nichtbenetzende Schicht hindurch erstrecken, worin die benetzende Schicht (52) dem Fluidreservoirbereich (47) ausgesetzt ist.

2. Vorrichtung (20) nach Anspruch 1, bei welcher der eine oder die mehreren Kanäle (60) eine Weite von etwa 0,1 Mikrometer bis etwa 5 Mikrometer aufweisen.

3. Vorrichtung (20) nach Anspruch 1, bei welcher der eine oder die mehreren Kanäle (60) Durchgangslöcher sind.

4. Vorrichtung (20) nach Anspruch 1, bei welcher der Flusspfad (220, 222, 215) und die Entlüftungseinrichtung (45) in einem Körper aus Silikonmaterial sind.

5. Vorrichtung (20) nach Anspruch 1, bei welcher die benetzende Schicht (52) eine Oberflächenenergie von etwa 40 Dyn/cm oder mehr aufweist, bestimmt gemäß dem Dyn-Test.

6. Vorrichtung (20) nach Anspruch 1, bei welcher die benetzende Schicht (52) ein Silikonmaterial ist.

7. Vorrichtung (20) nach Anspruch 1, bei welcher die nichtbenetzende Schicht (54) eine Oberflächenenergie von etwa 25 Dyn/cm oder weniger aufweist, bestimmt gemäß dem Dyn-Test.

8. Vorrichtung (20) nach Anspruch 1, bei welcher die nichtbenetzende Schicht (54) ein Polymer ist.

9. Vorrichtung (20) nach Anspruch 8, bei welcher das Polymer ein Fluorpolymer ist.

10. Vorrichtung (20) nach Anspruch 1, bei welcher die nichtbenetzende Schicht (54) eine Dicke von etwa 2 Mikrometer oder weniger aufweist.

11. Vorrichtung (20) nach Anspruch 1, bei welcher die benetzende Schicht (52) eine Dicke von etwa 25 Mikrometer oder weniger aufweist.

12. Vorrichtung (20) nach Anspruch 1, welche einen piezoelektrischen Aktuator aufweist.

13. Vorrichtung (20) nach Anspruch 1, bei welcher die Düsenöffnung eine Weite von etwa 200 Mikrometer oder weniger aufweist.

14. Vorrichtung (20) nach Anspruch 1, bei welcher die Vorrichtung eine Mehrzahl von Fluidpfaden und eine Mehrzahl von entsprechenden Entlüftungseinrichtungen (45) aufweist.

15. Verfahren zum Ausstoßen von Tropfen, aufweisend:

    Bereitstellen eines Flusspfades (220, 222, 215), in dem Fluid unter Druck gesetzt wird zum Ausstoßen von Tropfen aus einer Düse;
    bevor das Fluid unter Druck gesetzt wird, Aussetzen des Fluides einer Entlüftungseinrichtung (45), wobei die Entlüftungseinrichtung (45) einen Fluidreservoirbereich (47), eine Vakuumbereich (49) und eine Partition (50) zwischen dem Reservoirbereich (47) und dem Vakuumbereich (49) aufweist, wobei die Partition (50) eine benetzende Schicht (52) und eine nichtbenetzende Schicht (54) sowie einen oder mehrere Kanäle (60) durch die benetzende Schicht (52) und die nichtbenetzende Schicht (54) aufweist;
    Richten von Fluid in den Reservoirbereich (47);
    Bereitstellen eines Vakuums im Vakuumbereich (49), das einen Fluidfluss in den Vakuumbereich (49) durch die Kanäle (60) untersagt.

16. Verfahren nach Anspruch 15, in welchem ein Radius von einem des einen oder der mehreren Kanäle (60) geringer ist als ein Wert, der definiert ist durch die folgende Gleichung:

$$\underline{2 \text{ (die Oberflächenenergie des Fluids)}}$$

$$\underline{\text{den Vakuumdruck.}}$$

17. Verfahren nach Anspruch 15, in welchem das Vakuum einen Druck von etwa 10 bis 27 mmHg aufweist.

18. Tropfenausstoßvorrichtung nach Anspruch 3, bei welcher ein Durchmesser von zumindest einem der Durchgangslöcher zwischen etwa 200 Nanometer und etwa 800 Nanometer ist.

19. Tropfenausstoßvorrichtung nach Anspruch 3, bei welcher eine Wand, die zumindest eines der Durchgangslöcher definiert, eine mikrostrukturierte Oberfläche aufweist.

**Revendications**

1. Un dispositif d'éjection de gouttes (20), comprenant :

   un trajet d'écoulement (220, 222, 215) dans lequel du fluide est mis sous pression pour éjecter une goutte d'une ouverture de buse, et
   un désaérateur (45) comprenant une région de réservoir de fluide (47),
   une région sous vide (49), et une cloison (50) entre la région de réservoir de fluide (47) et la région sous vide (49), **caractérisé en ce que**
   la cloison (50) comprend une couche mouillable (52) et une couche non mouillable (54) et un ou plusieurs canaux (60) s'étendant au travers des couches mouillable et non mouillable, la couche mouillable (52) étant exposée à la région de réservoir de fluide (47).

2. Le dispositif (20) de la revendication 1, dans lequel les un ou plusieurs canaux (60) présentent une largeur d'environ 0,1 micron à environ 5 microns.

3. Le dispositif (20) de la revendication 1, dans lequel les un ou plusieurs canaux (60) sont des trous traversants.

4. Le dispositif (20) de la revendication 1, dans lequel le trajet d'écoulement (220, 222, 215) et le désaérateur (45) sont dans un corps de matériau silicium.

5. Le dispositif (20) de la revendication 1, dans lequel la couche mouillable (52) présente une énergie de surface d'environ 40 dynes par centimètre ou plus, tel que déterminé selon le test des dynes.

6. Le dispositif (20) de la revendication 1, dans lequel la couche mouillable (52) est un matériau silicium.

7. Le dispositif (20) de la revendication 1, dans lequel la couche non mouillable (54) présente une énergie de surface d'environ 25 dynes/cm ou moins tel que déterminé selon le test des dynes.

8. Le dispositif (20) de la revendication 1, dans lequel la couche non mouillable (54) est un polymère.

9. Le dispositif (20) de la revendication 8, dans lequel le polymère est un fluoropolymère.

10. Le dispositif (20) de la revendication 1, dans lequel la couche non mouillable (54) présente une épaisseur d'environ 2 microns ou moins.

11. Le dispositif (20) de la revendication 1, dans lequel la couche mouillable (52) présente une épaisseur d'environ 25 microns ou moins.

12. Le dispositif (20) de la revendication 1, comprenant un actionneur piézoélectrique.

**13.** Le dispositif (20) de la revendication 1, dans lequel l'ouverture de buse présente une largeur d'environ 200 microns ou moins.

**14.** Le dispositif (20) de la revendication 1, dans lequel le dispositif comprend une pluralité de trajets de fluide et une pluralité de désaérateurs correspondants (45).

**15.** Un procédé d'éjection de gouttes, comprenant :

l'établissement d'un trajet d'écoulement (220, 222, 215) dans lequel du fluide est mis sous pression pour éjecter des gouttes d'une buse ;
avant de mettre sous pression ledit fluide, l'exposition dudit fluide à un désaérateur (45), le désaérateur (45) comprenant une région de réservoir de fluide (47), une région sous vide (49), et une cloison (50) entre la région de réservoir (47) et la région sous vide (49), la cloison (50) comprenant une couche mouillable (52) et une couche non mouillable (54) et un ou plusieurs canaux (60) au travers de la couche mouillable (52) et de la couche non mouillable (54) ;
la direction du fluide dans ladite région de réservoir (47) ;
la production d'un vide dans ladite région sous vide (49) qui empêche l'écoulement du fluide jusque dans la région sous vide (49) au travers desdits canaux (60).

**16.** Le procédé de la revendication 15, dans lequel un rayon de l'un des un ou plusieurs canaux (60) est inférieur à une valeur définie par l'expression suivante :

$$2(\text{l'énergie de surface du fluide})/\text{la pression du vide.}$$

**17.** Le procédé de la revendication 15, dans lequel le vide présente une pression d'environ 10 à 27 mmHg.

**18.** Le dispositif d'éjection de gouttelettes de la revendication 3, dans lequel un diamètre d'au moins l'un des trous traversants est compris entre environ 200 nanomètres et environ 800 nanomètres.

**19.** Le dispositif d'éjection de gouttes de la revendication 3, dans lequel une paroi définissant au moins l'un des trous traversants présente une surface microstructurée.

**FIG. 1**

**FIG. 2**

FIG. 3A

FIG. 3B

FIG. 5A

FIG. 5B

100

FIG. 4A

100

52

FIG. 4B

100

100

52

47

FIG. 4C

FIG. 4D

FIG. 4E

FIG. 4F

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5265315 A, Hoisington
- US 4825227 A, Fishbeck
- US 4937598 A, Hine
- US 5659346 A, Moynihan
- US 5757391 A, Hoisington
- US 4940955 A, Hine
- US 4901082 A, Hoisington
- US 5701148 A, Moynihan
- US 5742313 A, Hine
- US 5808643 A
- US 18994702 A
- US 60510459 B

**Non-patent literature cited in the description**

- **Robert T. DeHoff.** Thermodynamics in Materials Science. McGraw-Hill, Inc, 1993
- **Joonwon Kim et al.** Nanostructured Surfaces for Dramatic Reduction of Flow Resistance in Droplet-Based Microfluidics. *IEEE publication number 0-7803-7185-2/02,* 479-482